(19) Europäisches Patentamt / European Patent Office / Office européen des brevets

(11) **EP 2 829 725 B1**

(12) **EUROPEAN PATENT SPECIFICATION**

(45) Date of publication and mention
of the grant of the patent:
**01.02.2017 Bulletin 2017/05**

(51) Int Cl.:
*F03D 9/00* *(2016.01)*   *F03G 3/00* *(2006.01)*
*A63G 21/00* *(2006.01)*   *F03D 5/04* *(2006.01)*
*H02K 53/00* *(2006.01)*

(21) Application number: **12872239.4**

(22) Date of filing: **30.11.2012**

(86) International application number:
**PCT/JP2012/081162**

(87) International publication number:
**WO 2013/140672 (26.09.2013 Gazette 2013/39)**

(54) **POWER SUPPLY SYSTEM**

STROMVERSORGUNGSSYSTEM

SYSTÈME D'ALIMENTATION ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2012 JP 2012085876**

(43) Date of publication of application:
**28.01.2015 Bulletin 2015/05**

(73) Proprietor: **Fotorada Corporation
Fuchu-shi, Tokyo 183-0006 (JP)**

(72) Inventor: **NUMAZAWA Eiji
Fuchu-shi
Tokyo 186-0006 (JP)**

(74) Representative: **Grünecker Patent- und
Rechtsanwälte
PartG mbB
Leopoldstraße 4
80802 München (DE)**

(56) References cited:
**WO-A1-2011/021265      GB-A- 2 037 507
JP-A- H0 754 762        JP-A- 2001 286 683
JP-A- 2011 140 935      JP-A- 2012 044 852
JP-Y2- H 076 944        US-A1- 2009 114 114**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a power supply system for generating and supplying electric power by using potential energy.

### BACKGROUND ART

Prior art document GB 2 037 507 A discloses an apparatus for controlling the regenerative braking of a transit vehicle by sensing the operation of the power source third rail for that transit vehicle for the purpose of preventing regeneration of power by a moving vehicle into that power source rail when it has been determined that the power source third rail is not receptive during the regenerative braking effort of that vehicle.

In recent years, a wind power generator is configured to rotate a wind mill by wind force and generate electric power by a power generator connected with the wind mill. However, the wind power generator has a problem in that stable electric power cannot be obtained due to output electric power that depends on wind force. In addition, there is a disadvantage in that it cannot be always easily installed in any place because of a requirement in a large-scale propeller for conversion of wind force into rotation force. Wind power generation has been therefore considered as one that is contrary to an idea of local supply and local consumption of energy.

Hence, there is proposed a wind power generator that utilizes a head wind generated during running of a vehicle or a ship, or navigation (Patent Literature 1) and a wind power generator that utilizes running wind similarly generated during running of a vehicle (Patent Literature 2). In a vehicle provided with a wind power generator, an attempt has been performed to avoid an unnecessary wind pressure by allowing part of generated running wind to escape [Patent Literature 3). It can be evaluated as one getting closer to local supply and local consumption of energy even though consumption of fuel or raw materials for driving or navigation is accompanied.

### CITATION LIST

#### Patent Literature

Patent Literature 1: Japanese Laid-Open Patent Publication No. 2011-144794
Patent Literature 2: Japanese Laid-Open Patent Publication No. 2011-157865
Patent Literature 3: Japanese Laid-Open Patent Publication No. 2010-150986

### SUMMARY OF INVENTION

#### Technical Problem

A problem to be solved by the present invention is to increase the number of variations of local supply and local consumption of energy. In other words, without regard to whether a system is new or existing, in particular in the case of the existing system, if the minimal change in the system allows the system to generate electric power, it can contribute local supply and local consumption of energy. This is the original way of thinking of the inventors.

#### Solution to Problem

The inventors have intensively studied to increase the number of variations of local supply and local consumption of energy and thought of flexible use of a roller coaster as an embodiment of flexible use of an existing system. A powerless carrier like a roller coaster has proper potential energy when it is located at a high place. In order to bring the roller coaster to the high place (to obtain potential energy), it is a fact that proper energy (e.g., electricity) is used. However, it is possible to increase the number of variations of local supply and local consumption of energy when the case where the roller coaster falls toward a low place, the case where it falls toward another high place in an opposite direction by force of passing through the low place (hereinafter, collectively referred to "running"), or the like is seized as an opportunity of power generation. The present invention has been therefore made in consideration of such a viewpoint.

It is the object of the present invention to provide a power supply system for generating and supplying electric power by using potential energy. According to the present invention said object is solved by a power supply system having the features of independent claim 1 or 5. Preferred embodiments are laid down in the dependent claims.

(First aspect)

A power supply system according to a first aspect (hereinafter, appropriately referred to as a system of the first aspect) includes: a running rail having at least one low place and at least one high place located at a level higher than the low place in a gravity direction (or each may be two or more places); a powerless carrier (hereinafter, simply referred to as a carrier) placed on the running rail; transporters A and B for transporting the carrier to the high place: a wind power generating mechanism with an impeller, the mechanism being provided on the carrier; and a power output terminal provided on the wind power generating mechanism, wherein electric power generated by rotation of the impeller directly or indirectly caused by running wind generated by running of the carrier is allowed to be taken out from the power output end. The low place and high place on the running rail are relative to each other. A place at a level higher than a certain low place is defined as a high place. Thus this high place will be defined as a low place if there is another high place higher than such a high place. As long as the impeller is located at a position where it is able to receive running wind required for power generation, the impeller may be in the inside of the carrier or may be on the outside thereof. The number, installation direction, and angle of impellers, the number of wheels, the shape of a chassis, the shape of a body, and the number of rails can be flexibly determined.

According to the system of the first aspect, the transporter A can transport the carrier to the high place. The carrier at the high place acquires potential energy relative to the low place. If the carrier is released here, the carrier runs on the running rail toward the low place while converting the potential energy into kinetic energy. The carrier receives a resistance of the running wind when running. The running wind rotates the impeller. Rotation of the impeller drives the wind power generating mechanism to generate electric power. The electric power generated from the wind power generating mechanism can be taken out from the power output terminal. The electric power output from the power output terminal may be charged into a battery charger or may be supplied to the outside via the rail or the like.

The power supply system according to the first aspect (hereinafter, appropriately referred to as a system of the first aspect) is configured such that the power output terminal is electrically connected with the running rail or a power-feeding rail (third rail) or an overhead power line arranged in parallel with the running rail and is able to take electric power from the running rail or the power-feeding rail. Since the battery charger is mounted on the carrier, the electrode of the battery charger may be connected in parallel with the running rail or the power-feeding rail.

(Second aspect)

A power supply system according to a second aspect (hereinafter, appropriately referred to as a system of the second aspect) is the system of the first aspect further including: a power-generation air passage having a running air intake port for allowing running wind to be incorporated into the wind power generating mechanism and a route outlet port for allowing the running wind incorporated from the running air intake port to be discharged to an outside of a vehicle; and the impeller is arranged in the power-generation air passage, and is configured to be rotated by receiving running wind incorporated from the running air intake port.

According to the system of the second aspect, the carrier is compactible because the power-generation air passage and the impeller are present in the inside of the carrier in addition to the operation and effects of the system described in the first aspect. In addition, the running wind can be centralized on the power-generation air passage. Thus, the energy of the running wind can be effectively utilized. In other word, concentrating the running wind causes an increase in wind velocity thereof, and, proportionately thereto, the impeller is allowed to rotate quickly, contributing to effective use of energy.

(Third aspect)

A power supply system according to a third aspect (hereinafter, appropriately referred to as a system of the third aspect) is the system of any one of the first and second aspects, wherein the powerless carrier is placed on the running rail via a plurality of wheels, at least one wheel (or the number of wheels may be two or more) among the wheels being connected to a wheel power generating mechanism to allow the wheel power generating mechanism to generate electric power, and the wheel power generating mechanism is configured to take the generated electric power from a power output terminal thereof.

According to the system of the third aspect, in addition to operation and effects of the system any one of the first and second aspects and in addition to electric power supply from the wind power generating mechanism, the electric power supply from the wheel power generating mechanism becomes possible.

(Fourth aspect)

A power supply system according to a fourth aspect (hereinafter, appropriately referred to as a system of the fourth aspect) is the system of any one of the first to third aspects, wherein the powerless carrier is a roller coaster (a jet coaster).

According to the system of the fourth aspect, in addition to operation and effects of the system of any one of the first to third aspects, an advantage is gained in that the existing infrastructure can be used. In other words, a power generating system can be built directly utilizing the existing infrastructure by providing the wheel of the roller coaster with the wind power generating mechanism or the like described so far. Although the expense for improvement of a vehicle or manufacture of new one, flexible use of an existing part such as a running rail can be sufficient without modification. It is therefore very economical.

(Fifth aspect)

A power supply system according to a fifth aspect (hereinafter, appropriately referred to as a system of the fifth aspect) includes: a running rail disposed at each of at least one low place and at least high place located at a level higher than the low place in a gravity direction; a powerless carrier placed on the running rail via wheels so as to be run on the running rail; transporters A and B for transporting the carrier to the high place; a power generator rotatably connected to the wheel, and a power output terminal provided in the power generator, wherein the power generator is rotated by rotation of the wheel to take out electric power from the power output end.

According to the system of the fifth aspect, the carrier is transported to the high place by the transporter A. The carrier at the high place acquires potential energy relative to the low place. If the carrier is released here, the carrier runs on the running rail toward the low place while converting the potential energy into kinetic energy. As the wheel runs, the power generator is driven by the wheel to generate electric power. The electric power generated by the power generator can be taken out from the power output terminal. The electric power taken out from the power output terminal may be charged into the battery charger or may be supplied to the outside via the rail or the like.

(Sixth aspect)

A method for supplying electric power according to a sixth aspect (hereinafter, appropriately referred to as a method of the sixth aspect), including: generating electric power by running wind produced by running an impeller on a rail of a powerless carrier, the impeller being provided in an impeller-equipped wind power generating mechanism mounted on a powerless carrier running by conversion of given potential energy into kinetic energy.

According to the method of the sixth aspect, the carrier located at the high place and provided with the potential energy runs on the rail toward the low place while converting the potential energy into the kinetic energy. The carrier receives a resistance of the running wind when running. The running wind rotates the impeller. Rotation of the impeller drives the wind power generating mechanism to generate electric power. The electric power generated from the wind power generating mechanism can be taken out from the power output terminal. The electric power output from the power output terminal may be charged into a battery charger or may be supplied to the outside via the rail or the like.

**Advantageous Effects of Invention**

According to the present invention, it is possible to increase the number of variations of local supply and local consumption of energy. In other words, without regard to whether a system is new or existing, in particular in the case of the existing system, the minimal change in the system allows the system to generate electric power to contribute local supply and local consumption of energy.

**BRIEF DESCRIPTION OF DRAWINGS**

FIG. 1    is a schematic plan view of a power supply system (figure-of-eight rail).
FIG. 2    is a side view illustrating a difference in height of a running rail.
FIG. 3    is a plan view of a powerless carrier.
FIG. 4    is a side view of the powerless carrier.
FIG. 5    is a schematic diagram of a transporter A.
Fig. 6    is a schematic plan view of a power supply system.

**DESCRIPTION OF EMBODIMENTS**

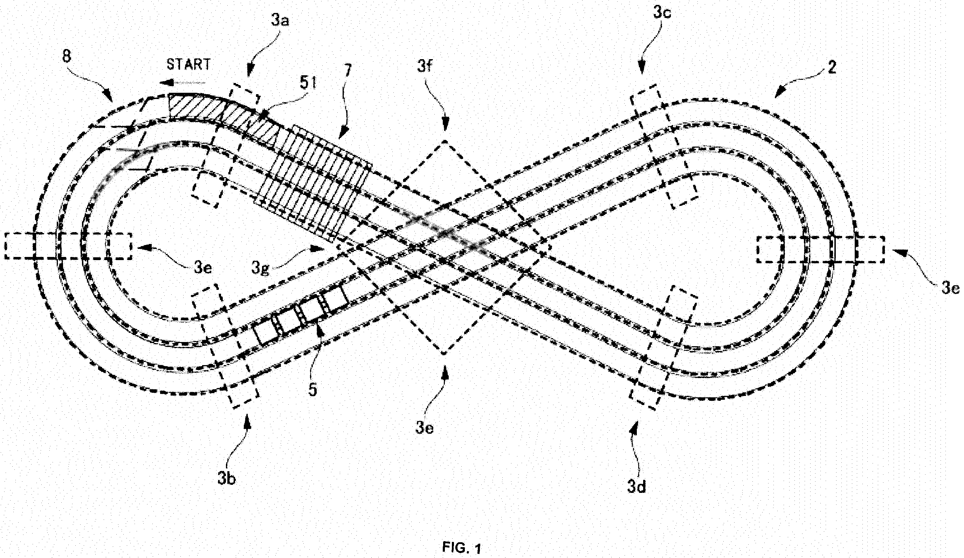

A mode for carrying out the invention (hereinafter, referred to as an embodiment) will be described with reference to each of the drawings. As illustrated in FIGS. 1, 3, and 5, first, a power supply system 1 (hereinafter, a power supply system 1 (hereinafter, appropriately referred to as a system 1) includes a running rail 3 or a running rail 6, a powerless carrier 5, a transporter A51, a transporter B7, an impeller 9, a wind power generating mechanism 11, a power output terminal 13, a wheel power generating mechanism 11a, and a power output terminal 13a. Then, the system 1 incudes a battery charger 15 in the case that electric power cannot be supplied from the running rail. Hereafter, these are individually described.

As illustrated in FIGS. 1, and 2 or FIG. 6, the running rail 3 or the running rail 6 are formed of two parallel rails and built on an orbit 2. The basic type is a two-parallel-rail system on the bottom of the carrier 5, which is comparatively easily balanced and sufficiently simple in structure. Alternatively, if required, it is unavoidably built so as to engage with wheels provided at predetermined positions of the left and right sides or roof portion of the carrier 5. Hereinafter, unless otherwise specified in the following description, each of the running rail 3 and the running rail 6 generically represents two rails on the bottom. Furthermore, when simply representing the running rail 3 or the running rail 6 (hereinafter, appropriately abbreviated as a rail), unless otherwise specified, it includes an orbit 2 on which the rail 3 or the rail 6 is built. Hereinafter, the orbit 2 illustrated in FIGS. 1, 2, and 6 is represented in reduced size compared with the size of the carrier 5. This is because of illustrating them to fit on the size of paper.

(Configuration of figure-of-eight rail)

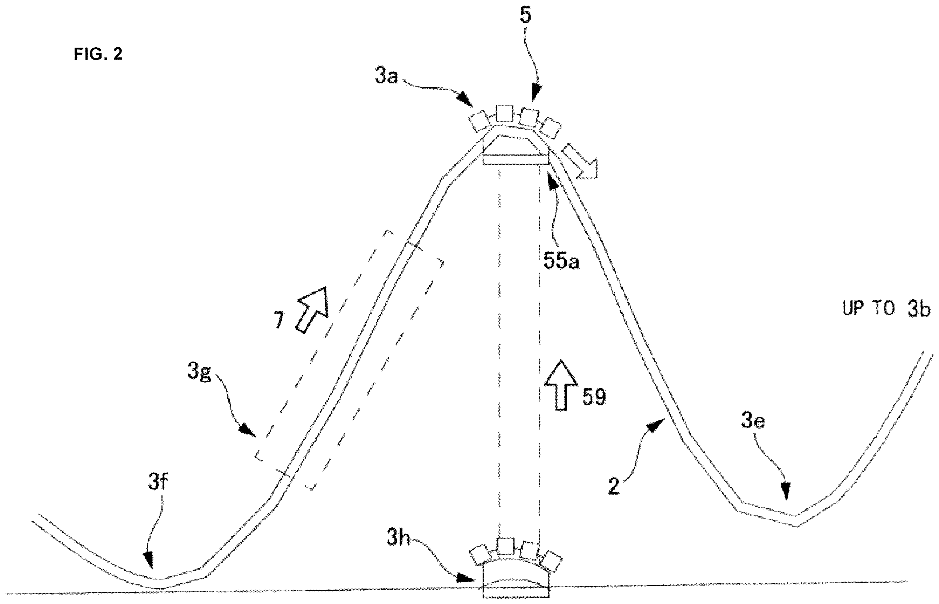

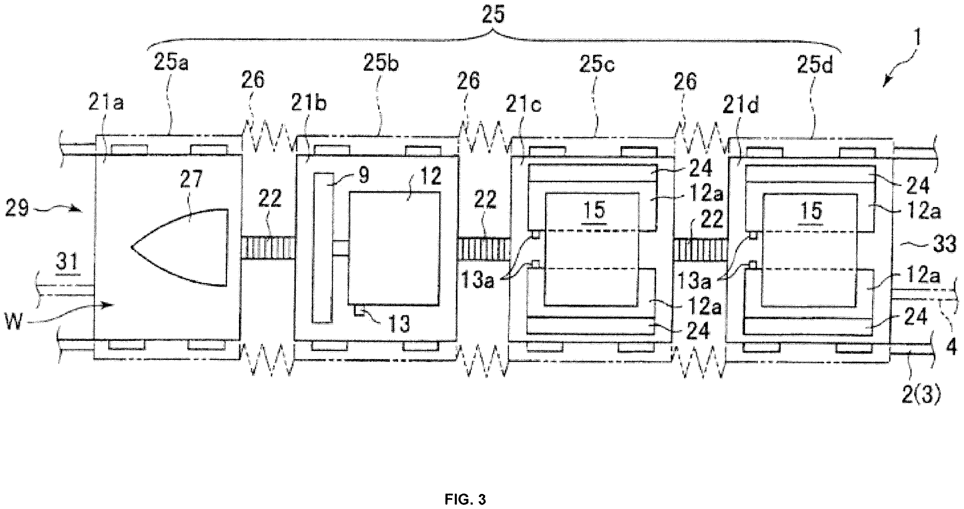

A figure-of-eight rail 3 has at least one low place and at least one high place located at a level higher than the low place in a gravity direction between its starting and end points. Specifically, as illustrated in FIG. 1, it is in the shape of a figure of eight in a planar view and has a difference in height as illustrated in FIG. 2. That is, it descends to the lowest place 3f after repeating descent and ascent from the highest place 3a to the intermediate places 3e, 3b, 3e, 3c, 3e, and 3d, followed by successively extending from the lowest place 3f to the transportation starting point 3g. It further successively extends from the transportation starting point 3g to the highest place serving as a transportation end point. During this interval, it is inclined in an ascending manner. Although the reason of forming an orbit 2 (rail 3) in the shape of a figure of eight in plain view is to make it possible to successively generate electric power while circulating, the shape of the orbit 2 (rail 3) is not limited to a figure of eight. Furthermore, reference numeral 4 in FIG 3 denotes a power-feeding rail (indicated by a two dot chain line) constructed in parallel with the rail 3 (alternatively, it may extend along the outside of the rail 3). A first one of a plurality of carries 5 transported to the highest place 3a by the transporter A51 is able to run a specified lane and then sequentially move to the adjacent lane at a certain position by switching a switching point, which is used for changing the traveling direction of a train or the like. Accordingly, the transporter A51 may be provided for at least one lane.

(Configuration of other rails)

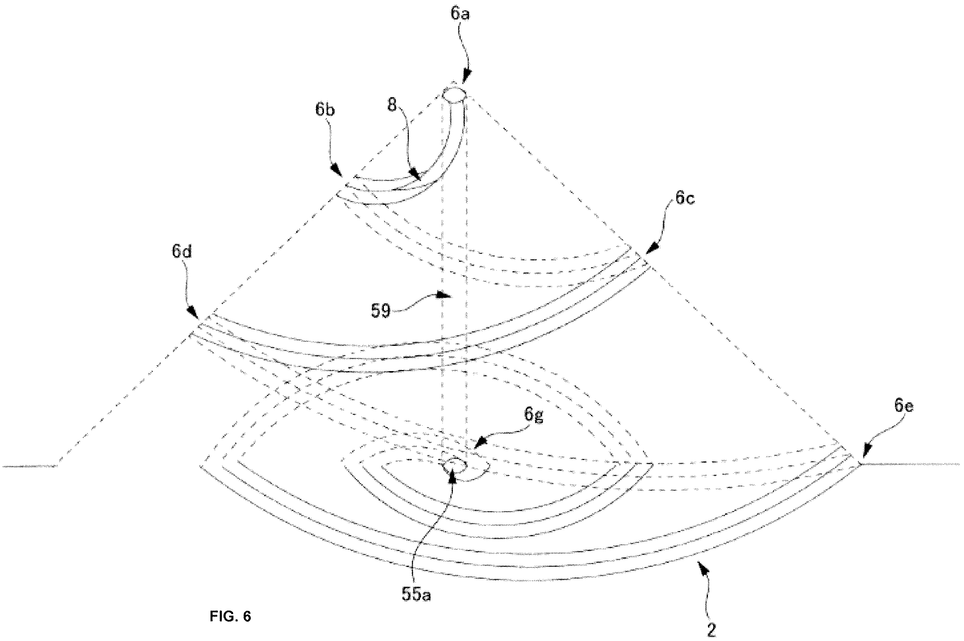

Description will be made with reference to FIG. 6. There is also included a rail 6 along which the carrier 5, which is transported by the transporter A51 and placed in a state of being positioned at, for example, the peak (i.e., the highest place 6a) of a big screw placed upside down, runs down from the highest place 6a to the ground as the bottom along the threads of the screw while passing through points 6b, 6c, and 6d as if the carrier 5 progressively form a larger arc. Upon arriving at a pass point 6e, the arc serving as an orbit becomes smaller and the speed of the carrier 5 is lowered. In such a state, the carrier arrives at the center point 6g serving as a transportation-starting point of the transporter A51. Subsequently, the carrier 5 is transported to the highest place 6a again by the transporter A51 and then repeats its running. In this embodiment, the switching point 8 allows an increase in the number of lanes. If the rail 6 is employed, there is no need of the transporter B7. For convenience, the following description is based on the rail 3.

(Configuration of transporter B)

As illustrated in FIG. 1, the transporter B7 is a device for allowing the carrier 5 located at the transportation-starting point 3g to be released to a higher place, the highest position 3a. In the present embodiment, the transporter B7 includes a conveyor belt driven with a battery charger or the like charged by the preceding day. Alternatively, the transporter B7 may be any of other systems. The wheels of the carrier 5 running on the rail 3 continue rotating while being transported by the transporter B7. The carrier 5 transported to the highest place 3a by the transporter B7 obtains potential energy against the low position 3e. The transporter B7 is configured to release the carrier 5 at the highest position 3a. The released carrier 5 runs on the rail 3 while converting its potential energy into kinetic energy.

(Schematic configuration of powerless carrier)

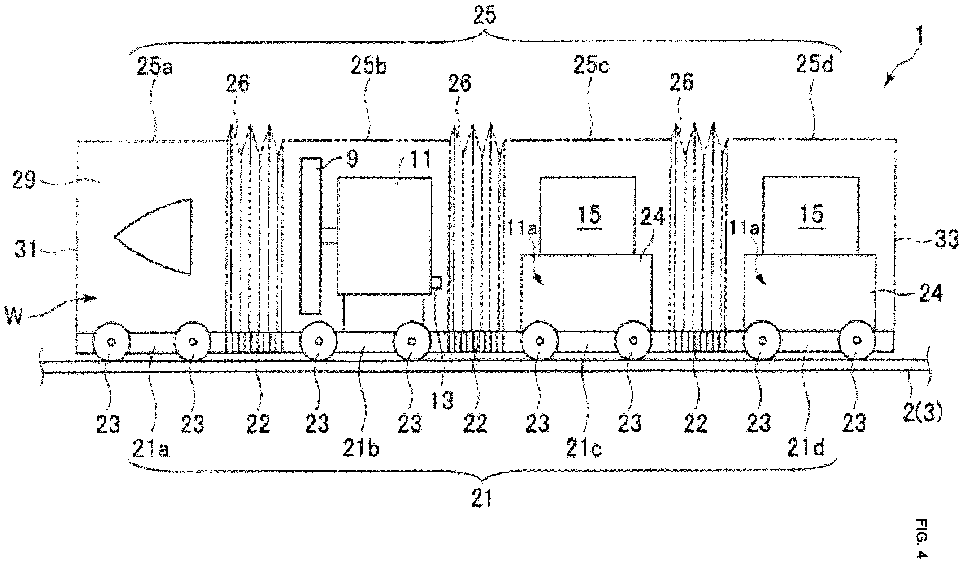

Description is made with reference to FIGS. 1, 3, and 4. The powerless carrier 5 (hereinafter, simply referred to as a carrier 5) includes a chassis section 21 and a body section 25, which are provided as base members thereof. The carrier 5 does not carry any power source for running. As described later, kinetic energy converted from potential energy serves as energy at the time of power generation. The chassis member 21 is basically constructed of a head chassis section 21a and a successive chassis section 21b that follows the head chassis section 21 a. Two or more successive chassis sections 21b may be provided even though only necessary is at least one. In this embodiment, the number of the successive chassis sections is three, including a successive chassis 21 b on which a wind power generating mechanism is mounted and successive chassis sections 21c to 21 d on which a wheel power generating mechanism is mounted. As another embodiment, the wind power generating mechanism is only connected or the wheel power generating mechanism is only connected. When connecting the wheel power generating mechanism, the head section is formed in a streamline shape with a small air resistance. The back end of the head chassis section 21a in the travelling direction is connected to the front end of the successive chassis section 21b in the same direction via a joint 22. The joint 22 has a joint structure that allows, when the carrier 5 vertically or horizontally changes its travelling direction, the successive chassis section 21b to follow a change in travelling direction of the carrier 5 with respect to the head chassis section 21a. The above joints 22 are also used in connection between the successive chassis 21b and the successive chassis 21c and connection between the successive chassis 21c and the successive chassis 21d. A plurality of wheels 23 is attached to the both sides of each of the head chassis section 21a and the successive chassis sections 21b to 21 d so that these wheels can rotate on the rail 3. The body section 25 includes a head body part 25a and successive body parts 25b to 25d. The head body part 25a corresponds to the head chassis section 21a, and the successive body parts 25b to 25d correspond to the successive chassis sections 21b to 21d, respectively. The body parts are connected to each other via an accordion structure 26. The connection with the accordion structure 26 is provided so as to be allowed to follow a vertical or horizontal change in travelling direction by flexible elasticity in a manner similar to the joint 22, and so as to block a leakage of air incorporated into the body to the outside as far as possible by its airtightness. Furthermore, a wing or weight, yaw control rotary impeller, or the like for obtaining down force may be provided on the inside or outside of the body if required. In FIGS. 3 and 4, each vehicle has four wheels. However, the number of wheels per vehicle is not limited to four.

(Composition of wind power generating mechanism)

A wind power generating mechanism (hereinafter, referred to as a power generating mechanism 11) is illustrated in FIGS. 3 and 4. The power generating mechanism 11 is mounted on each of the head chassis section 21a and the successive chassis section 21b and is configured to be able to generate electric power by running wind w (see FIG. 4) caused by running of the carrier 5. In other words, the power generating mechanism 11 mainly includes: a cannonball-shaped head section 27 mounted on the head chassis 21 a, an impeller 9 and a power generator 12 mounted on the successive chassis section 21 b, and a power-generation air passage 29 surrounded by the chassis section 21 and the body section 25. First, the power-generation air passage 29 will be illustrated. In the power-generation air passage 29, a running air intake port 31 is formed as a starting point and opened at the tip of a head body part 25a in a travelling direction and the back end of the successive body part 25d is formed as an end point communicated with the starting point via the successive body parts 25b and 25c. In other words, it is designed that the running wind w incorporated from the running air intake port 31 passes through the power-generation air passage 29 and is then discharged from a route outlet port 33.

In the power-generation air passage 29, an impeller 9 is arranged so that it can be rotated by efficiently receiving the running wind w. An output axis of the impeller 9 is attached to the rotor of the power generator 12 to rotate integrally with the rotor. The combination of these structural components allow the rotor of the power generator 12 (the rotor is located in the inside of the power generator 12) to rotate by rotation of the impeller 9 so that generated electric power can be taken out from the power output terminal 13 of the power generator 12. The installation direction, angle, and the like of the impeller can be flexibly defined.

On the other hand, instead of the wind power generating mechanism 11, a wheel power generating mechanism 11a is mounted on each of the successive chassis sections 21c and 21d. The wheel power generating mechanism 11a includes a power generator 12a, a wheel 23, and a gearbox 24 disposed between the power generating mechanism 12a and the wheel 23. That is, the wheel 23 is rotationally connected to the rotor of the power generator 12a (the rotor is not shown because of being inside the power generator 12a). The rotation of the wheel 23 running on the rail 3 causes the power generator 12a to generate electric power. The electric power generated by the power generator 12a can be taken out from the power output terminal 13a.

If required, the battery charger 15 can be removably mounted on each of the successive chassis sections 21c and 21d.

The electric power generated from the power generator 12 and the electric power generated from the power generator 12a can be respectively charged into the battery charger 15.

(Operation and effects of the present embodiment)

Referring now to FIGS. 1 and 2, the operation and effects of the present embodiment are described. When the carrier 5 located at the highest place 3a illustrated in FIG. 1 is released from restriction with the transporter A51, the carrier 5 runs on the rail 3 toward the lowest place 3f via the intermediate points 3b to 3d while converting its potential energy into kinetic energy. When passing through the lowest place 3f, due to inertia, the carrier 5 runs upward and reaches to the transportation starting point 3g while newly obtaining potential energy. Subsequently, after passing through the transportation starting point 3g, the carrier 5 is transported by the transporter B7 to the highest place 3e. Consequently, the run of the carrier 5 is looped back to the start. If required, the same run is repeated. In this embodiment, descent and ascent are respectively repeated four times, but may be performed in other cycles.

During the run, the running wind w is incorporated into the power-generation air passage 29 of the carrier 5. The incorporated running wind w rotates the impeller 9. The rotation of the impeller 9 causes the power generator 12 to generate electric power. Then, the generated electric power is charged into the battery charger 15 via the power output terminal 13 or supplied to the outside via the power-feeding rail 4 or the like. On the other hand, the rotation of the wheel 23 accompanying the run of the carrier 5 causes the power generator 12a to generate electric power. Likewise, the generated electric power is charged or supplied to the outside via the power output terminal 13.

Thus, according to the power supply system 1, electric power can be generated using potential energy obtained by the carrier 5.

(Modified example of transporter A)

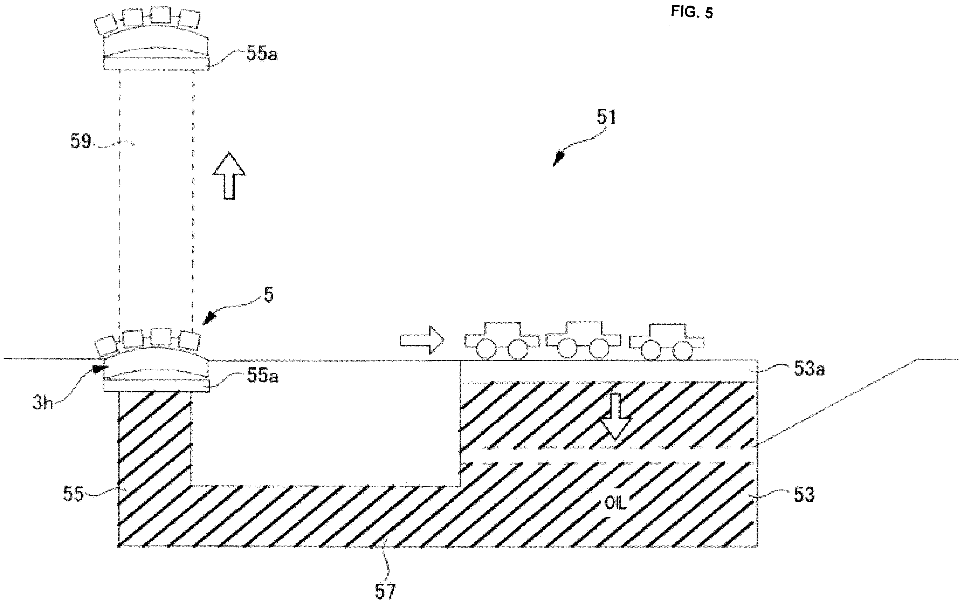

Referring now to FIG. 5, a modified example of the transporter A51 is described. The transporter A51 generally includes a large diameter tank 53, a small diameter tank 55, an up/down arm 59, a connection tank 57 connecting between the large diameter tank 53 and the small diameter tank 55, and is filled with oil or the like. The up/down arm 59 is able to expand and contract (up and down) with respect to the small diameter tank 55 by means of oil pressure or the like. A large diameter plate 53a floats on the liquid surface of the large diameter tank 53. A part of small diameter plate 55a and running rail 3 (orbit) (this is called 3h) are attached to the upper bed of up/down arm 59. The small diameter plate 55a is made larger than the bases area of the small diameter tank so that it may not go into the ground more than needed. The large diameter plate 53a is configured to allow several vehicles to be parked thereon and the weight thereof can be adjusted by parking and retrieving the vehicles.

The operation of the transporter A51 is described. The steady state of the transporter A51 is a state where the carrier 5 is at the same level as the ground as illustrated in FIG. 5. The running rail 3 is configured such that part thereof located on the highest place 3a can be removable. When the up/down arm 59 of a hydraulic type or the like, which is closely attached to the lower portion of the removable part (hereinafter, referred to as a removal part 3h), satisfies the following inequality 1, the up/down arm 59 moves upward to bring the carrier 5 thereon up to the highest place 3a.

*Inequality 1*:

Weight of carrier 5 + Weight of small diameter plate 55a + Weight of part 3h of running rail < Weight of X vehicles + Weight of large diameter plate 53a

When the carrier 5 is requested to be pulled down, or to be returned to the steady state, the following inequality 2 should be satisfied.

*Inequality 2*:

Weight of [X - 1] vehicles + Weight of large diameter plate 53a < Weight of carrier 5 + Weight of small diameter plate 55a + Weight of part 3h of running rail

Furthermore, when the up/down arm 59 is pulled down after releasing the carrier, the following inequality 3 should be

satisfied.

*Inequality 3*:

Weight of large diameter plate 53a < Weight of small diameter plate 55a +

Weight of part 3h of running rail

The base area of the large diameter tank 53 is several times larger than the base area of the small diameter tank 55. Thus, an increasing distance of the small diameter plate 55a can be several times larger than the decreasing distance of the large diameter plate 53a.

(Flexible use of existing equipment)

The power supply system mentioned above can also be realized by flexible use of the existing equipment. In other words, a so-called roller coaster is provided with the impeller or the like which are installed in the carrier, and allowed to run on the rail to make power generation possible using potential energy. Furthermore, for example, when playground equipment such as a roller coaster is suspended, an amusement park is closed, or operation thereof is stopped, the flexible use or diversion of part or whole of the roller coaster in the power supply system of the present invention is also included.

**REFERENCE SIGNS LIST**

1...Power supply system, 2...Orbit, 3...Running rail (figure-of-eight rail), 4...Power-feeding rail, 5...Powerless carrier (carrier), 7...Transporter B, 9...Impeller, 11...Wind power generating mechanism (power generating mechanism), 11 a... Wheel power generating mechanism (power generating mechanism), 12...Power generator, 12a... Power generator, 13...Power output terminal, 13a...Power output terminal, 15...Battery charger, 21...Chassis section, 21a...Head chassis, 21b...Successive chassis, 53a...Large diameter plate, 55a...Small diameter plate, 55...Small diameter tank, 57...Connection layer, 59...Up/down arm, W...running wind, 3h...Rail-removing portion, 21c...Successive chassis, 21d...Successive chassis, 22...Joint, 23...Wheel, 24...Gearbox, 25...Body section, 25a...Head body part, 25b to d...successive body part, 26...Accordion structure, 27...Head section, 29...power-generation air passage having, 31...Running air intake port, 33...Route outlet port, 51...Transporter A, 53...Large diameter tank, 6...Thread type rail, 8...Switching point

**Claims**

1.   A power supply system comprising:

a running rail having at least one low place and at least one high place located at a level higher than the low place in a gravity direction;
a powerless carrier placed on the running rail so as to be run on the running rail;
a powerless transporter, and if required a powered transporter, for transporting the powerless carrier to the high place;
a wind power generating mechanism with an impeller, the mechanism being provided on the powerless carrier; and
a power output terminal provided on the wind power generating mechanism,
wherein electric power generated by rotation of the impeller directly or indirectly caused by running wind generated by running of the powerless carrier can be taken out from the running rail electrically connected to the power output terminal or taken out from a power-feeding rail or an overhead power line arranged in parallel to the running rail.

2.   The power supply system according to claim 1, wherein the wind power generating mechanism includes a power-generation air passage having a running air intake port for allowing running wind to be incorporated into the wind power generating mechanism and a route outlet port for allowing the running wind incorporated from the running air intake port to be discharged to an outside of a vehicle, and
wherein the impeller is arranged in the power-generation air passage and is configured to be rotated by receiving running wind incorporated from the running air intake port.

3. The power supply system according to claim 1 or 2, wherein the powerless carrier is placed on the running rail via a plurality of wheels, at least one wheel among the wheels being connected to a wheel power generating mechanism to allow the wheel power generating mechanism to generate electric power, and
wherein the wheel power generating mechanism is configured to take the generated electric power from a power output terminal thereof.

4. The power supply system according to any one of claims 1 to 3, wherein the powerless carrier is a roller coaster.

**Patentansprüche**

1. Leistungs-Versorgungs-System mit:

   einer Laufschiene, die zumindest einen niederen Ort und zumindest einen hohen Ort hat, der an einem höheren Niveau als der niedere Ort in Gravitationsrichtung angeordnet ist;
   einen antriebsfreier Träger, angeordnet auf der Laufschiene, so dass er auf der Laufschiene läuft;
   einen antriebsfreier Transporter oder, wenn gefordert, ein angetrieben Transporter zum Transportieren des antriebsfreien Trägers zum hohen Ort;
   einen Wind-Energie-Erzeugungsmechanismus mit einem Flügelrad, der Mechanismus ist an dem antriebsfreien Träger angeordnet; und
   einem Leistungs-Abgabeanschluss, vorgesehen an dem Wind-Energie-Erzeugungsmechanismus,
   wobei elektrische Leistung erzeugt durch Rotation des Flügelrades direkt oder
   indirekt bewirkt durch Fahrtwind erzeugt durch Laufen des antriebsfreien Trägers kann von der Laufschiene abgenommen werden, elektrisch verbunden zu dem Leistungs-Abgabeanschluss oder von einer Leistungs-Zuführschiene oder einer Überkopf-Leistungslinie abgenommen werden, angeordnete parallel zur Laufschiene.

2. Leistungs-Versorgungs-System gemäß Anspruch 1, wobei der Wind-Energie-Erzeugungsmechanismus eine Leistungs-Erzeugungs-Luftpassage beinhaltet, mit einem Fahrtwind-Einlassanschluss, der erlaubt, Fahrtwind in den Wind-Energie-Erzeugungsmechanismus aufzunehmen und einen Fahrweg-Auslassanschluss, der erlaubt, Fahrtwind, aufgenommen von dem Fahrtwind-Einlassanschluss zur Außenseite des Fahrzeugs abzugeben, und
wobei das Flügelrad in der Leistungs-Erzeugungs-Luftpassage angeordnet ist und ausgebildet ist, sich durch Aufnahme von Fahrtwind zu drehen, aufgenommen von dem Fahrtwind-Einlassanschluss.

3. Das Leistungs-Versorgungs-System gemäß Anspruch 1 oder 2, wobei der leistungsfreie Träger auf der Laufschiene über eine Mehrzahl von Rädern plaziert ist, zumindest eines der Räder von den Rädern ist mit einem Rad-Energie-Erzeugungsmechanismus verbunden, um es dem Rad-Energie-Erzeugungsmechanismus zu erlauben, elektrische Leistung zu erzeugen, und
wobei der Rad-Energie-Erzeugungsmechanismus ausgebildet ist, die erzeugte elektrische Leistung von einem Leistungs-Abgabeanschluss desselben zu nehmen.

4. Das Leistungs-Versorgungs-System gemäß einem der Ansprüche 1 bis 3,
wobei der leistungsfreie Träger eine Achterbahn ist.

**Revendications**

1. Système d'alimentation comprenant :

   un rail circulant comportant au moins un emplacement bas et au moins un emplacement haut situé à un niveau supérieur à celui de l'emplacement bas dans le sens de la gravité,
   un porteur sans alimentation placé sur le rail circulant de façon à courir sur le rail circulant,
   un transporteur sans alimentation, et si nécessaire un transporteur alimenté, destiné à transporter le porteur sans alimentation vers l'emplacement haut,
   un mécanisme de génération d'énergie éolienne comportant une turbine, le mécanisme étant prévu sur le porteur sans alimentation, et
   une borne de sortie de puissance prévue sur le mécanisme de génération d'énergie éolienne,
   dans lequel la puissance électrique générée par la rotation de la turbine, directement ou indirectement provoquée par l'air circulant généré en faisant courir le porteur sans alimentation, peut être prélevée du rail circulant, relié électriquement à la borne de sortie de puissance, ou bien peut être prélevée depuis un rail d'alimentation de puissance ou depuis une ligne aérienne de courant agencée parallèlement au rail circulant.

2. Système d'alimentation selon la revendication 1, dans lequel le mécanisme de génération d'énergie éolienne inclut un passage d'air de génération d'énergie comportant un orifice d'admission d'air circulant destiné à permettre l'incorporation de l'air circulant dans le mécanisme de génération d'énergie éolienne, ainsi qu'un orifice de sortie de trajet destiné à permettre l'éjection de l'air circulant incorporé à partir de l'orifice d'admission d'air circulant vers l'extérieur d'un véhicule, et
dans lequel la turbine est agencée dans le passage d'air de génération d'énergie et elle est configurée pour être mise en rotation par la réception de l'air circulant incorporé à partir de l'orifice d'admission d'air circulant.

3. Système d'alimentation selon la revendication 1 ou la revendication 2, dans lequel le porteur sans alimentation est placé sur le rail circulant par l'intermédiaire d'une pluralité de roues, au moins une roue parmi les roues étant reliée à un mécanisme de génération d'énergie par roues pour permettre au mécanisme de génération d'énergie par roues de générer de l'énergie électrique, et
dans lequel le mécanisme de génération d'énergie par roues est configuré pour prélever la puissance électrique générée à partir d'une borne de sortie de puissance de celui-ci.

4. Système d'alimentation selon l'une quelconque des revendications 1 à 3, dans lequel le porteur sans alimentation est un manège de montagnes russes.

FIG. 1

FIG. 2

EP 2 829 725 B1

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2037507 A
- JP 2011144794 A
- JP 2011157865 A
- JP 2010150986 A